# EUROPEAN PATENT SPECIFICATION

(11) **EP 3 745 162 B1**
(45) Date of publication and mention of the grant of the patent: **13.08.2025**
(21) Application number: 18886505.9
(22) Date of filing: 13.11.2018
(51) Int. Cl.: G01S 13/95, G01S 7/41, G01S 7/02

(54) **PRECIPITATION PARTICLE IDENTIFICATION DEVICE, PRECIPITATION PARTICLE IDENTIFICATION METHOD, AND PRECIPITATION PARTICLE IDENTIFICATION PROGRAM**
VORRICHTUNG ZUR IDENTIFIZIERUNG VON AUSFÄLLUNGSPARTIKELN, VERFAHREN ZUR IDENTIFIZIERUNG VON AUSFÄLLUNGSPARTIKELN UND PROGRAMM ZUR IDENTIFIZIERUNG VON AUSFÄLLUNGSPARTIKELN
DISPOSITIF, PROCÉDÉ ET PROGRAMME D'IDENTIFICATION DE PARTICULES DE PRÉCIPITATION

(30) Priority: 06.12.2017 JP 2017234024
(43) Date of publication of application: 02.12.2020
(73) Proprietor: Furuno Electric Co., Ltd., Nishinomiya-City, Hyogo 662-8580 (JP)
(72) Inventor: HAYANO, Mariko, Nishinomiya-City Hyogo 662-8580 (JP)
(74) Representative: Müller Hoffmann & Partner
(86) International application number: PCT/JP2018/041905
(87) International publication number: WO 2019/111641

(56) References cited:
- WO-A1-2017/051647
- WO-A1-2017/051647
- WO-A1-2017/122408
- JP-A- 2011 027 546
- US-A1- 2015 145 717
- US-B1- 8 601 864
- HAIJIANG WANG ET AL: "Study on deep-learning-based identification of hydrometeors observed by dual polarization Doppler weather radars", EURASIP JOURNAL ON WIRELESS COMMUNICATIONS AND NETWORKING, BIOMED CENTRAL LTD, LONDON, UK, vol. 2017, no. 1, 27 October 2017 (2017-10-27), pages 1 - 9, XP021250292, DOI: 10.1186/S13638-017-0965-5
- HONGPING LIU ET AL: "Classification of Hydrometeors Based on Polarimetric Radar Measurements: Development of Fuzzy Logic and Neuro-Fuzzy Systems, and In Situ Verification", JOURNAL OF ATMOSPHERIC AND OCEANIC TECHNOLOGY, vol. 17, no. 2, 1 February 2000 (2000-02-01), pages 140 - 164, XP055373583, DOI: 10.1175/1520-0426(2000)017<0140:COHBOP>2.0.CO;2
- ROBERTO NICOLETTA ET AL: "Test and validation of particle classification based on meteorological model and weather radar simulator", 2016 EUROPEAN RADAR CONFERENCE (EURAD), EUMA, 5 October 2016 (2016-10-05), pages 201 - 204, XP033041468
- UYEDA HIROSHI : "Next Generation Observations on Precipitation System", TENKI - WEATHER, vol. 56, no. 6, 30 June 2009 (2009-06-30), JP, pages 420 - 425, XP009523353, ISSN: 0546-0921
- SUZUKI OSAMU : "A story of an old and new observation device, weather radar", LECTURE MATERIALS OF THE 44TH SUMMER COLLEGE 'NEW METEOROLOGY', 7 August 2010 (2010-08-07), JP, pages 1 - 5, XP009523354

## Description

### TECHNICAL FIELD

The present disclosure mainly relates to a precipitation particle discriminator which can discriminate a type of precipitation particles such as rain and snow.

### BACKGROUND OF THE INVENTION

Conventionally, a method of discriminating a type of precipitation particles by using a dual polarization radar capable of transmitting and receiving a horizontally polarized wave and a vertically polarized wave, is known. Nonpatent Document 1 discloses this type of method of discriminating precipitation particles.

Nonpatent Document 1 discloses a method of discriminating precipitation particles such as rain particles and snow particles, based on polarization parameters acquired by using a dual polarization. The polarization parameters relate to a radar reflective factor (Zhh), a differential reflective factor (Zdr), a specific differential phase (Kdp), and a correlation coefficient (ρhv).

### [Reference Document of Conventional Art]

### [Nonpatent Document]

[Nonpatent Document 1] Takeharu Kouketsu, Hiroshi Uyeda, Tadayasu Ohigashi, Mariko Oue, Hiroto Takeuchi, Taro Shinoda, and Kazuhisa Tsuboki, 2015: A Hydrometeor Classification Method for X-Band Polarimetric Radar: Construction and Validation Focusing on Solid Hydrometeors under Moist Environments, JOURNAL OF ATMOSPHERIC AND OCEANIC TECHNOLOGY, Vol.32, pp.2052-2074

The paper by Haijiang Wang et al.: "Study on deep-learning-based identification of hydrometeors observed by dual polarization Doppler weather radars", in EURASIP JOURNAL ON WIRELESS COMMUNICATIONS AND NETWORKING, BIOMED CENTRAL LTD, London, UK, vol. 2017, no. 1, 27 October 2017, pages 1 to 9, XP021250292, DOI: 10.1186/S13638-017-0965-5 discloses a hydrometeor-type identification system that comprises a dual polarization weather radar, and on the basis of calculating a 21 x 21 x 4 matrix of data and of applying a classifier, the type of hydrometeor is judged, using fuzzy logic.

WO 2017/051647 A1 discloses a dual-pol weather radar that calculates polarimetric parameters including reflectivity and differential reflectivity, and determining statistics of the polarimetric parameters in a window around a given point including mean of reflectivity and mean and variance of differential reflectivity, and further teaches discriminating between rain, snow and hail therefrom.

The paper by Hongping Liu et al.: "Classification of Hydrometeors Based on Polarimetric Radar Measurements: Development of Fuzzy Logic and Neuro-Fuzzy Systems, and In Situ Verification", JOURNAL OF ATMOSPHERIC AND OCEANIC TECHNOLOGY, vol. 17, no. 2, 1 February 2000, pages 140 to 164, XP055373583, DOI: 10.1175/1520-0426(2000)017 0140:COHOBOP2.0.CO;2 discloses fuzzy classification for hydrometeor classification using radar measurements including reflectivity and differential reflectivity. When using membership functions that account for the coupling between reflectivity and differential reflectivity, these membership functions are adjusted.

The paper by Roberto Nicoletta et al.: "Test and validation of particle classification based on meteorological model and weather radar simulator", 2016 EUROPEAN RADAR CONFERENCE (EURAD), EUMA, 5 October 2016, pages 201 to 204, XP033041468, as retrievable on 2017-01-09, teaches to use a support vector machine with polarimetric data for hydrometeor classification.

### DESCRIPTION OF THE DISCLOSURE

### [Problem to be Solved by the Disclosure]

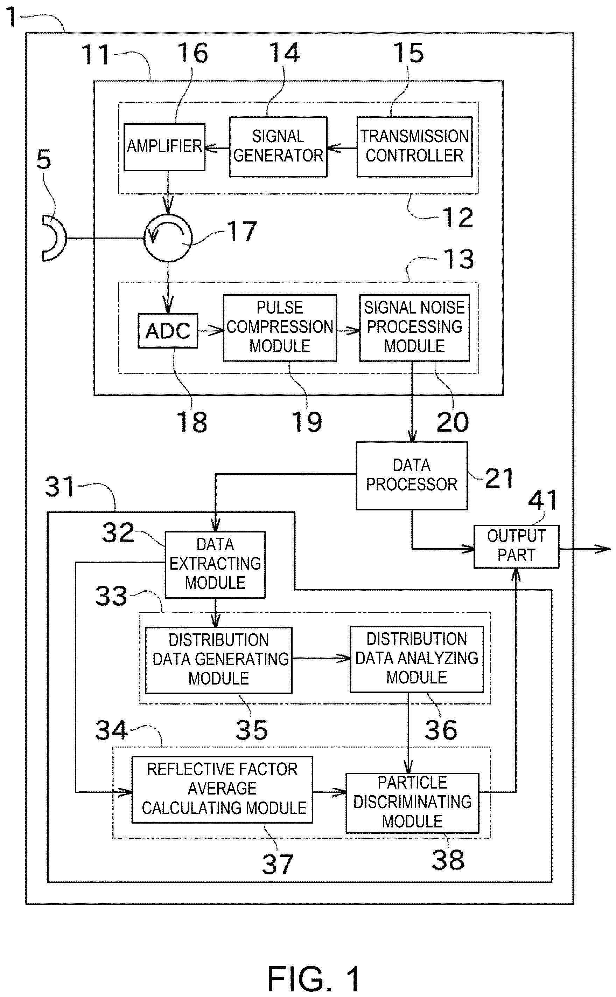

However, in the method disclosed in Nonpatent Document 1, as illustrated in Fig. 1 of the document, since value ranges of polarization parameters acquired from different types of precipitation particles overlap each other, it is preferably difficult to uniquely distinguish the types of the precipitation particles. Therefore, there is room for an improvement from the perspective of improving the accuracy of discriminating the precipitation particles.

The present disclosure is made in view of the above situations, and a purpose thereof is to provide a precipitation particle discriminator etc. which can accurately discriminate a type of precipitation particles by efficiently using polarization parameters.

### [Summary and Effect(s) of the Disclosure of the Invention]

The problem to be solved by the present disclosure is as described above, and measures to solve the problem and effects thereof are described as follows.

Namely, the problem is solved by the subject-matter of the independent claims.

According to the first aspect of the present disclosure, a precipitation particle discriminator with the following configuration is provided. That is, the precipitation particle discriminator includes an acquiring part, a data processor, a distribution data generating module, a distribution data analyzing module and a discrimination processing module. The acquiring part acquires horizontally polarized reception signals and vertically polarized reception signals by transmitting and receiving horizontally polarized waves and vertically polarized waves, respectively. The data processor acquires information on radar reflective factors and information on differential reflective factors that are polarization parameters calculated based on the horizontally polarized reception signal and the vertically polarized reception signal. The distribution data generating module generates distribution data indicative of relationship between the radar reflective factor information and the differential reflective factor information in a plurality of sampling ranges included in a discrimination target range, wherein the distribution data is a scatter plot where a first axis indicates the radar reflective factor, and a second axis indicates the differential reflective factor. The distribution data analyzing module calculates an evaluation value used for discriminating a type of precipitation particles based on the distribution data, wherein the evaluation value is calculated using an approximated line of the distribution data, wherein the approximated line is a straight line, and the evaluation value is calculated at least using a slope of the straight line, and wherein the evaluation value is calculated further using an intercept of the straight line. The discrimination processing module discriminates the type of the precipitation particles existing in the discrimination target range based on the evaluation value.

That is, a liquid precipitation particle has the tendency that the value of the differential reflective factor increases as the value of the radar reflective factor increases, while a solid precipitation particle rarely has such a tendency. Therefore, by evaluating the relationship between the two values, the type of the precipitation particles can be discriminated suitably.

In the precipitation particle discriminator, the evaluation value is preferably a value derived based on information indicating strength of correlation between the radar reflective factor information and the differential reflective factor information.

According to this, by evaluating the intensity of the correlation, the type of the precipitation particles can be discriminated more suitably.

In the precipitation particle discriminator, the evaluation value is calculated using an approximated line of the distribution data.

According to this, by using the approximated line, the strength of the correlation between the value of the radar reflective factor and the value of the differential reflective factor can be evaluated by an easy processing.

In the precipitation particle discriminator, the approximated line is a straight line, and the evaluation value is calculated at least using a slope of the straight line.

According to this, the strength of the correlation between the value of the radar reflective factor and the value of the differential reflective factor can be evaluated suitably by an easy processing.

In the precipitation particle discriminator, the evaluation value is calculated further using an intercept of the straight line.

According to this, by evaluating including the intercept of the straight line, the accuracy of the discrimination of precipitation particles can be improved.

In the precipitation particle discriminator, the evaluation value is preferably calculated by a weighted addition of the slope and the intercept of the straight line.

According to this, both the slope and the intercept of an approximated straight line can be evaluated in a balanced manner, thus the accuracy of the discrimination of precipitation particles can be improved.

In the precipitation particle discriminator, the evaluation value is preferably a value of the differential reflective factor information on the approximated line, when a value of the radar reflective factor information is a given value of 40dBZ or higher and 60dBZ or lower.

According to this, regarding a liquid precipitation particle, the tendency that the value of the differential reflective factor increases as the value of the radar reflective factor increases can be effectively reflected. Therefore, the evaluation value on which the tendency is effectively reflected can be calculated, and the accuracy of the discrimination of precipitation particles can be improved.

In the precipitation particle discriminator, the evaluation value is preferably a value of the differential reflective factor information on the approximated line, corresponding to an average of values of the radar reflective factor information in the distribution data.

According to this, the representative evaluation value can be acquired by an easy processing.

In the precipitation particle discriminator, preferably, the discrimination processing module does not discriminate when a deviation of the distribution data from the approximated line is larger than a given amount.

According to this, for example, when suitable approximation cannot be performed due to the influence of noise, etc., the discrimination is not performed, which prevents a false discrimination.

In the precipitation particle discriminator, the discrimination processing module preferably discriminates the type of the precipitation particles based on a discriminant function having, as variables, a representative value that represents values of the radar reflective factor information comprising the distribution data, and the evaluation value.

According to this, the distribution of data groups is clearly distinguished at least between rain particles and snow particles, thus, the discriminant function can be simplified and an accurate discrimination can be achieved.

In the precipitation particle discriminator, the distribution data is a scatter plot where a first axis indicates the radar reflective factor, and a second axis indicates the differential reflective factor.

According to this, the type of the precipitation particles can be discriminated by using the data in which the relationship between the radar reflective factor and the differential reflective factor is further clarified.

In the precipitation particle discriminator, the discrimination by the discrimination processing module preferably includes discriminating whether the precipitation particles are rain or snow.

According to this, it can be achieved to distinguish rain and snow uniquely, which was difficult conventionally only with the polarization parameters.

The precipitation particle discriminator preferably has the following configuration. That is, the precipitation particle discriminator further includes a data extracting module configured to extract the radar reflective factor information and the differential reflective factor information in the plurality of sampling ranges included in the discrimination target range within an observation range, from the radar reflective factor information and the differential reflective factor information that are the polarization parameters calculated and acquired by the data processor based on the horizontally polarized reception signals and the vertically polarized reception signals. The distribution data generating module generates the distribution data based on the radar reflective factor information and the differential reflective factor information extracted by the data extracting module.

According to this, since the distribution data is generated based on the radar reflective factor information and the differential reflective factor information in the sampling ranges included in the given discrimination target range within an observation range, the load of data processing can be reduced.

According to the second aspect of the present disclosure, a precipitation particle discriminating method including the following steps is provided. That is, the method includes acquiring horizontally polarized reception signals and vertically polarized reception signals by transmitting and receiving horizontally polarized waves and vertically polarized waves, respectively. The method includes acquiring information on radar reflective factors and information on differential reflective factors that are polarization parameters calculated based on the horizontally polarized reception signals and the vertically polarized reception signals. The method includes generating distribution data indicative of relationship between the radar reflective factor information and the differential reflective factor information in a plurality of sampling ranges included in a discrimination target range, wherein the distribution data is a scatter plot where a first axis indicates the radar reflective factor, and a second axis indicates the differential reflective factor. The method includes calculating an evaluation value used for discriminating a type of precipitation particles based on the distribution data, wherein the evaluation value is calculated using an approximated line of the distribution data, wherein the approximated line is a straight line, and the evaluation value is calculated at least using a slope of the straight line, and wherein the evaluation value is calculated further using an intercept of the straight line. The method includes discriminating the type of the precipitation particles existing in the discrimination target range based on the evaluation value.

According to the third aspect of the present disclosure, a precipitation particle discriminating program having the following configuration is provided. That is, the precipitation particle discriminating program causes the precipitation particle discriminator of the first aspect to execute the steps of: an acquiring step, a data processing step, a distribution data generating step, an analysis data analyzing step, and a discrimination processing step. In the acquiring step, horizontally polarized reception signals and vertically polarized reception signals are acquired by transmitting and receiving horizontally polarized waves and vertically polarized waves, respectively. In the data processing step, information on radar reflective factors and information on differential reflective factors that are polarization parameters calculated based on the horizontally polarized reception signals and the vertically polarized reception signals are acquired. In the distribution data generating step, distribution data indicative of relationship between the radar reflective factor information and the differential reflective factor information in a plurality of sampling ranges included in a discrimination target range is generated, wherein the distribution data is a scatter plot where a first axis indicates the radar reflective factor, and a second axis indicates the differential reflective factor. In the analysis data analyzing step, an evaluation value used for discriminating a type of precipitation particles is calculated based on the distribution data, wherein the evaluation value is calculated using an approximated line of the distribution data, wherein the approximated line is a straight line, and the evaluation value is calculated at least using a slope of the straight line, and wherein the evaluation value is calculated further using an intercept of the straight line. In the discrimination processing step, the type of the precipitation particles existing in the discrimination target range is discriminated based on the evaluation value.

### BRIEF DESCRIPTION OF DRAWINGS

Fig. 1 is a block diagram illustrating a configuration of a weather radar device according to one embodiment of the present disclosure.
Fig. 2 is a plan view schematically illustrating relationship between a determination target range where precipitation particles are discriminated, and observation meshes.
Figs. 3(a) and (b) are graphs each illustrating distribution data indicative of relationship between values of radar reflective factors and values of differential reflective factors, and an approximated straight line of distribution, in which Fig. 3(a) is a case where precipitation particles are rain particles, and Fig. 3(b) is a case where precipitation particles are snow particles.
Fig. 4 is a scatter plot which explains processing for discriminating between rain and snow by using an average value of the radar reflective factors and an evaluation value.
Fig. 5 is a flowchart illustrating processing executed by a precipitation particle discriminating part.
Fig. 6 is a schematic view illustrating a precipitation particle discriminating system not according to the invention.

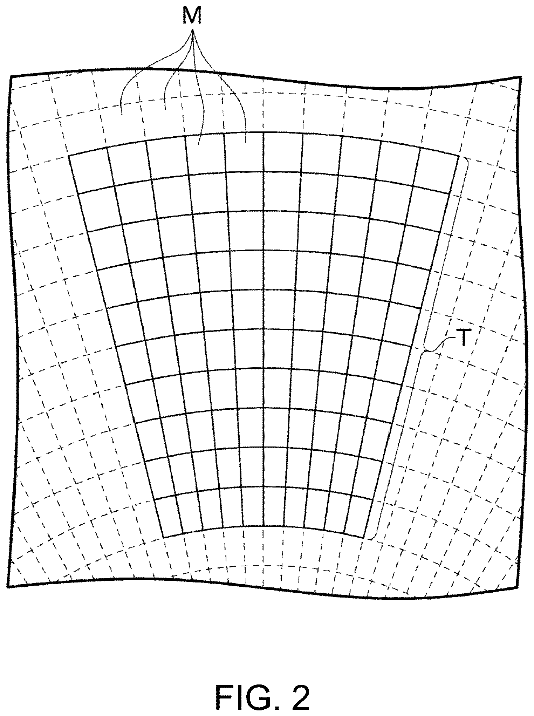

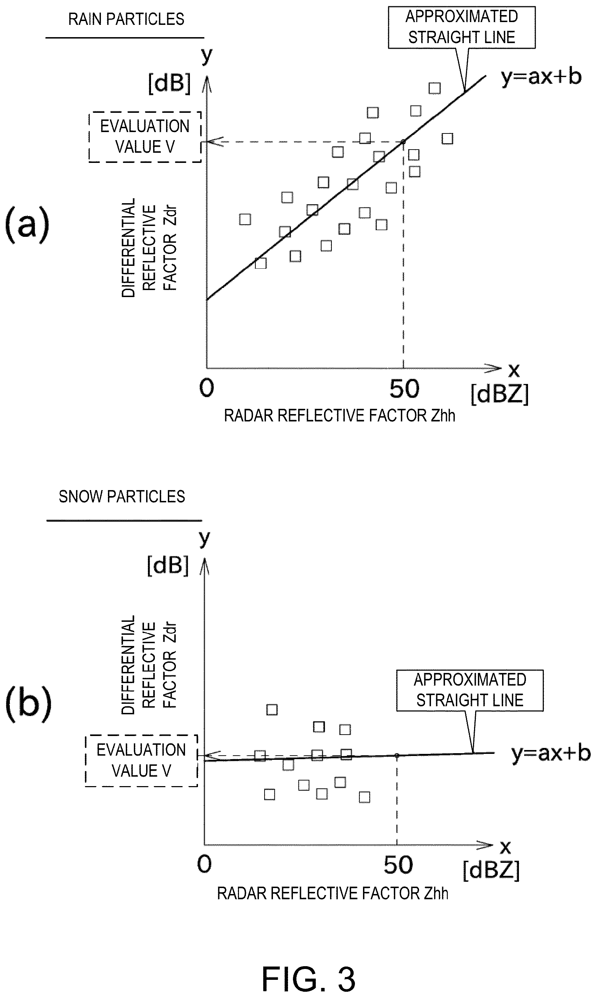

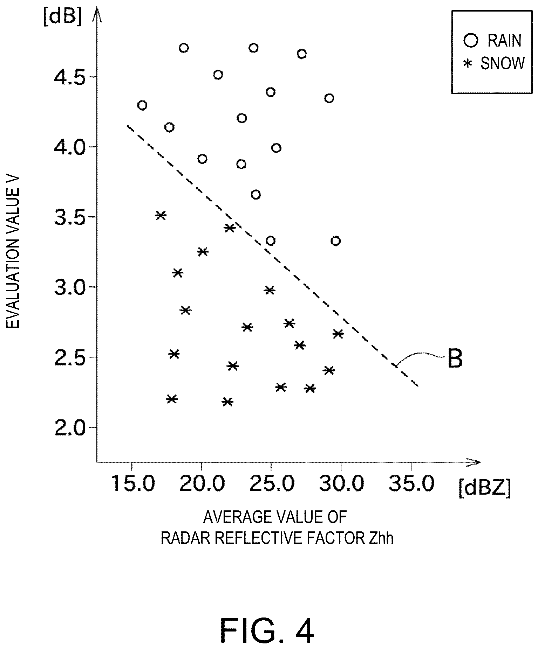

Next, one embodiment of the present disclosure will be described with reference to the drawings. Fig. 1 is a block diagram illustrating a configuration of a weather radar device 1 according to one embodiment of the present disclosure. Fig. 2 is a plan view schematically illustrating relationship between a discrimination target range T where precipitation particles are discriminated, and observation meshes M. Figs. 3(a) and (b) are graphs each illustrating distribution data indicative of relationship between values of radar reflective factors Zhh and values of differential reflective factors Zdr, and an approximated straight line of the distribution. Fig. 3(a) is a case where precipitation particles are rain particles, and Fig. 3(b) is a case where precipitation particles are snow particles. Fig. 4 is a scatter plot which explains processing for discriminating between rain and snow by using an average value of the radar reflective factors Zhh and an evaluation value V.

The weather radar device 1 (precipitation particle discriminator) illustrated in Fig. 1, acquires data related to weather in a given space (hereinafter, referred to as an "observation range"), for example, by transmitting and receiving radio waves in a frequency band of X-band while rotating an antenna 5. The weather radar device 1 is comprised as a dual polarization radar, and transmit two types of radio waves (a horizontally polarized wave and a vertically polarized wave) so that various data can be observed. Such a radar is called a "multi-parameter radar."

This weather radar device 1 includes a radar (acquiring part) 11, a data processor 21, a discriminator 31, and an output part 41.

The radar 11 actually transmits and receives a radio wave to/from the observation range, and output to the data processor 21 a signal based on the received radio wave.

The data processor 21 receives an input of the signal outputted from the radar 11, and calculate various polarization parameters. The data processor 21 outputs the acquired polarization parameters to the discriminator 31 and the output part 41.

The discriminator 31 comprises a part of the weather radar device 1. and have a function to discriminate the precipitation particles. The discriminator 31 discriminates a type of precipitation particles when the discrimination target range T specified in the observation range has precipitation. The discriminator 31 preferably outputs a result of the discrimination to the output part 41.

The output part 41 preferably outputs the various polarization parameters obtained by the data processor 21, and the discrimination result obtained by the discriminator 31 to an external storage device etc. This output part 41 preferably includes a wired or wireless communication interface.

The discriminator 31 is preferably implemented by a computer of a known configuration, similarly to the data processor 21 and the output part 41. This computer preferably includes a CPU, a ROM, a RAM, and an input/output interface. The ROM preferably stores, for example, a program for implementing a method of discriminating precipitation particles according to the present disclosure. By the hardware and the software described above working together, the computer can be implemented as the discriminator 31, the data processor 21, the output part 41, etc.

Description is given about the radar 11. The radar 11 preferably includes a transmission signal output part 12, the antenna 5, and a reception signal processor 13.

The transmission signal output part 12 preferably outputs a transmission signal to the antenna 5. The transmission signal output part 12 preferably includes a signal generator 14, a transmission controller 15, and an amplifier 16. The signal generator 14 preferably generates a transmission signal and output it to the amplifier 16. Note that a timing of outputting the transmission signal is preferably controlled by the transmission controller 15. The transmission signal outputted by the signal generator 14 is preferably amplified by the amplifier 16, and then outputted to the antenna 5 via a circulator 17.

The antenna 5 preferably transmits a radio wave as the transmission signal to the observation range, as well as receive a reflection wave which is a reflection of the radio wave on precipitation particles, etc. The antenna 5 is preferably rotatable in a horizontal plane by a rotating mechanism which includes, for example, a motor as a driving source (not illustrated). Therefore, the antenna 5 is preferably capable of repeatedly transmitting and receiving radio waves while rotating in the horizontal plane. Moreover, the antenna 5 can transmit and receive the radio waves by changing an elevation angle by the rotating mechanism. Accordingly, the antenna 5 can three-dimensionally scan the observation range of a hemispheric shape. Note that a horizontally polarized reception signal and a vertically polarized reception signal which are reception signals received by the antenna 5 are preferably outputted to the reception signal processor 13 via the circulator 17.

The reception signal processor 13 preferably executes signal processing to the reception signal received by the antenna 5. The reception signal processor 13 preferably includes an A/D converter 18, a pulse compression module 19, and a signal noise processing module 20.

The A/D converter 18 preferably converts the reception signal into a digital signal, and output the digital signal to the pulse compression module 19.

The pulse compression module 19 preferably performs a pulse compression to the digital signal outputted from the A/D converter 18 so as to improve, for example, a signal-to-noise ratio (S/N ratio) of the reception signal. The signal to which the pulse compression is performed is preferably outputted to the signal noise processing module 20.

The signal noise processing module 20 preferably removes noise such as frequency noise. The signal noise processing module 20 preferably outputs the signal to which the noise processing is performed to the data processor 21.

Description is given about the data processor 21. The data processor 21 calculates polarization parameters for respective observation meshes (sampling areas) M which are areas finely dividing the observation range, based on the reception signals inputted from the radar 11.

In this embodiment, the polarization parameters calculated and acquired by the data processor 21 includes the radar reflective factor Zhh and the differential reflective factor Zdr.

The radar reflective factor Zhh preferably indicates an intensity of a radar reflective wave. The radar reflective factor is preferably, for example, a reflective intensity when the horizontally polarized wave is transmitted and received (Zhh), or a reflective intensity when the vertically polarized wave is transmitted and received (Zvv). However, in this embodiment, the reflective wave when the horizontally polarized wave is transmitted and received (Zhh) is preferably used as the radar reflective factor.

The differential reflective factor Zdr is preferably expressed as a ratio of the reflective intensity of the horizontally polarized wave (Zhh) to the reflective intensity of the vertically polarized wave (Zvv). The differential reflective factor Zdr preferably indicates an aspect ratio of a precipitation particle. It is known that, when the precipitation particle is rain, a raindrop preferably becomes flat by receiving an air resistance as the raindrop becomes larger. Therefore, the differential reflective factor Zdr is preferably an important parameter in order to estimate a particle size distribution of the raindrop.

The data processor 21 preferably calculates, as polarization parameters in addition to those described above, correlation coefficient ρhv, a specific differential phase Kdp, a Doppler velocity Vd, etc.

The data processor 21 preferably repeats the calculation of the polarization parameters every time a scanning of the observation range for one time is completed by the radar 11, and new reception signals for all the observation meshes M are obtained. Therefore, the polarization parameters for all the observation meshes M in the observation range can be acquired at a given time interval (e.g., every one minute).

The data processor 21 preferably outputs the calculated polarization parameters to the output part 41. Moreover, the data processor 21 preferably outputs, among the calculated polarization parameters, the radar reflective factors Zhh and the differential reflective factors Zdr to the discriminator 31.

Description is given about the discriminator 31. The discriminator 31 preferably includes a data extracting module 32, an evaluation value calculating module 33, and a discrimination processing module 34.

The data extracting module 32 preferably extracts, from the data inputted into the discriminator 31, data of radar reflective factors Zhh and differential reflective factors Zdr related to observation meshes M included in a given discrimination target range T which is specified in advance, among the observation meshes M dividing the observation range.

The discrimination target range T is preferably, as illustrated in Fig. 2, a fan-shaped two-dimensional range when seen from above, but not limited to this. For example, since the radar 11 can scan a space three-dimensionally while changing the elevation angle of the antenna 5, the discrimination target range T is preferably a three-dimensional shape having a fan shape when seen from both above and the side. The term "range" used herein preferably includes both a two-dimensional range and a three-dimensional range.

The data extracting module 32 outputs the values of the radar reflective factors Zhh and the values of the differential reflective factors Zdr of observation meshes M included in the discrimination target range T to the evaluation value calculating module 33. Moreover, the data extracting module 32 preferably outputs the extracted values of the radar reflective factors Zhh to the discrimination processing module 34.

The evaluation value calculating module 33 generates distribution data based on the values of the radar reflective factors Zhh and the values of the differential reflective factors Zdr of observation meshes M which are inputted from the data extracting module 32. The evaluation value calculating module 33 preferably statistically analyzes this distribution data so as to calculate an evaluation value V which is used for discriminating the precipitation particles.

The evaluation value calculating module 33 includes a distribution data generating module 35, and a distribution data analyzing module 36.

The distribution data generating module 35 generates the distribution data which indicates the relationship between the radar reflective factors Zhh and the differential reflective factors Zdr obtained for respective observation meshes M included in the discrimination target range T. This distribution data is a scatter plot, and a first axis indicates the radar reflective factor, and a second axis indicates the differential reflective factor. Accordingly, the type of the precipitation particles can be discriminated by using the data in which the relationship between the radar reflective factors and the differential reflective factors is further clarified.

Note that, preferably, in order to remove influence of a radar echo reflected on an object other than the precipitation particle (e.g., an echo reflected on a building), and improve the accuracy of discrimination, thresholding is preferably performed on the data inputted from the data extracting module 32 before the distribution data generating module 35 generates the distribution data. For this thresholding, a suitable radar observation result (e.g., the S/N ratio, the radar reflective factor Zhh, and the differential reflective factor Zdr) is preferably used. Since this thresholding is a known technique, a detailed description is omitted.

The distribution data analyzing module 36 performs a regression analysis on the distribution data generated by the distribution data generating module 35 in order to calculate the evaluation value V from the distribution data. In this embodiment, the regression analysis includes obtaining an approximated straight line based on the distribution data. However, in examples not according to the invention, instead of the straight-line approximation, an approximation using a suitable curved-line is preferably performed.

A method of obtaining the evaluation value V is described. As illustrated in Figs. 3(a) and (b), in the scatter plot, a plane XY is defined by an x-axis (a first axis) which indicates the value of the radar reflective factor Zhh, and an y-axis (a second axis) which indicates the value of the differential reflective factor Zdr. On the XY plane, the relationship between the value of the radar reflective factor Zhh and the value of the differential reflective factor Zdr of each observation mesh M is plotted. A unit of the value of the radar reflective factor Zhh is dBZ, and a unit of the value of the differential reflective factor Zdr is dB.

In this embodiment, when an approximated straight line which is obtained by a first-order approximation of the distribution indicated in the scatter plot is expressed as "y=ax+b," the evaluation value V is preferably obtained by adding a y-intercept "b" to a value fifty times a slope "a" (V=a×50+b).

Here, in Figs. 3(a) and (b), relationship between the radar reflective factors Zhh and the differential reflective factors Zdr which are acquired from rain particles and snow particles, are described respectively.

Since rain particles are liquid, they preferably becomes flat due to influence of air resistance when the rain particles fall. A degree of flatness preferably increases as the rain particles become larger. Therefore, a radar echo reflected on the rain particles preferably has a tendency in which the value of the differential reflective factor Zdr increases as the value of the radar reflective factor Zhh increases. Thus, distribution when the discrimination target range T entirely has rain is preferably as illustrated in Fig. 3(a).

On the other hand, since snow particles are solid and difficult to deform into a flat shape when they fall, the snow particles don't preferably have the correlation as described above. Therefore, a radar echo reflected on the snow particles preferably has a tendency in which the value of the differential reflective factor Zdr is approximately constant even when the value of the radar reflective factor Zhh changes. As a result, distribution when the discrimination target range T entirely has snow is preferably as illustrated in Fig. 3(b).

Based on the above, when considering a straight line which most accurately illustrates the distribution data described above, it can be said that the slope a of the straight line indicates a strength of the tendency in which the value of the differential reflective factor Zdr increases as the value of the radar reflective factor Zhh increases. In other words, as the slop "a" increases, there is preferably a strong positive correlation between the value of the radar reflective factor Zhh and the value of the differential reflective factor Zdr.

Regarding to this, in this embodiment, since the equation for obtaining the evaluation value V which is used for discriminating the precipitation particles includes the slope a, it preferably becomes possible to accurately discriminate whether the precipitation particles are rain particles or snow particles. Moreover, by using the straight line as the approximated line, the strength of the correlation can be evaluated by an easy processing.

Further, in this embodiment, the evaluation value V is preferably obtained by adding the slope a and the y-intercept b of the approximated straight line while differentiating their weightings so that the influence of the slope becomes fifty times larger than that of the y-intercept. Therefore, both the slope and the y-intercept of the approximated straight line can be evaluated in a balanced manner.

Note that, when comparing the equation for obtaining the evaluation value V and the equation of the approximated straight line, the evaluation value V is preferably equal to a value of y when x=50 is substituted into the equation (Y= ax+b) of the approximated straight line. Figs. 3(a) and (b) indicate the method of obtaining the evaluation value on the basis of this aspect. Although the value to be substituted is not limited to x=50, a given value of 40dBZ or higher and 60dBZ or lower is preferably substituted. Moreover, a Zhh average value (described later) is preferably substituted.

However, various methods is preferably applied for obtaining the evaluation value V, and the method is preferably changed suitably. For example, the evaluation value V is preferably a value obtained by adding twice the value of b, to 100 times the value of a.

The distribution data analyzing module 36 in Fig. 1 calculates the equation of the approximated straight line described above from the distribution data so as to obtain the evaluation value V based on the equation. As a method of obtaining the equation of the approximated straight line, for example, a known least-squares method is preferably used. The distribution data analyzing module 36 outputs the calculated evaluation value V to the discrimination processing module 34.

In the least-squares method, the approximated straight line is preferably obtained such that a sum of squares of residual errors becomes the minimum. When the size of the residual errors (e.g., a value obtained by dividing the sum of squares of the residual errors by a number of data) is above a threshold, this means that the obtained straight line doesn't preferably not appropriately approximate the distribution for some reason such as influence of noise. Therefore, in this case, in order to avoid a decrease in the accuracy of the discrimination, the type of precipitation is preferably excluded from the object to be discriminated.

The discrimination processing module 34 preferably discriminates the type of the precipitation particles existing in the discrimination target range T, based on a value which is an average of the values of the radar reflective factors Zhh in the observation meshes M, and the evaluation value V outputted from the evaluation value calculating module 33.

The discrimination processing module 34 includes a reflective factor average calculating module 37, and a particle discriminating module 38.

The reflective factor average calculating module 37 preferably receives the input of the values of radar reflective factors Zhh for the observation meshes M included in the discrimination target range T, and calculate the average of the values. This average value can be a representative value in the distribution of the values of the radar reflective factors Zhh. The reflective factor average calculating module 37 preferably outputs the average value of the radar reflective factors Zhh (hereinafter, referred to as a "Zhh average value") to the particle discriminating module 38.

The particle discriminating module 38 preferably discriminates the type of the precipitation particles existing in the discrimination target range T, based on the Zhh average value outputted from the reflective factor average calculating module 37, and the evaluation value V outputted from the distribution data analyzing module 36. The particle discriminating module 38 preferably outputs the discrimination result to the output part 41.

A discrimination performed by the particle discriminating module 38 is described in detail. When a given discrimination target range T has rain and snow, a scatter plot where relationship between the Zhh average values and the evaluation values based on actual observation results is plotted, is as illustrated in Fig. 4. It can be seen that a distribution range of a rain data group and a distribution range of a snow data group are separated nearly clearly. In this embodiment, a discriminant function corresponding to a border B which separates the two ranges is preferably obtained in advance based on the observation, and the discriminant function is preferably set in advance in the particle discriminating module 38. In this embodiment, this discriminant function is preferably a two-variable function having the Zhh average value and the evaluation value as variables. In this embodiment, as illustrated in Fig. 4, since the two data groups are preferably linearly separable, the discriminant function is preferably a linear function. Note that the discriminant function is preferably a curved function instead of the linear function, as long as the discriminant function is a function which defines a threshold for determining the type of the precipitation particles. Since the ranges of the data groups are separated clearly, the discrimination can be performed accurately by using the simple discriminant function.

When the particle discriminating module 38 receives the input of the combination of the average value of radar reflective factors Zhh, and the evaluation value V based on a new observation, the particle discriminating module 38 preferably discriminates the type of the precipitation particles based on a sign of a calculation result obtained by substituting the average value of radar reflective factors Zhh and the evaluation value V into the discriminant function. In detail, when the sign of the discriminant function is plus, the particle discriminating module 38 preferably determines that the precipitation particles are "rain," and when the sign is minus, the particle discriminating module 38 preferably determines that they are "snow."

When the discrimination target range T has snow, the reflective intensity of the radio wave is preferably extremely small, and thus securing a suitable S/N ratio is preferably difficult. Regarding to this, since the discriminant function as described above is used in this embodiment, as illustrated in the scatter plot of Fig. 4, an accurate discrimination between rain and snow is preferably possible even when the Zhh average value is 20dBZ or below. Therefore, the type of the particles existing in the discrimination target range T can be stably and accurately discriminated under various weather conditions.

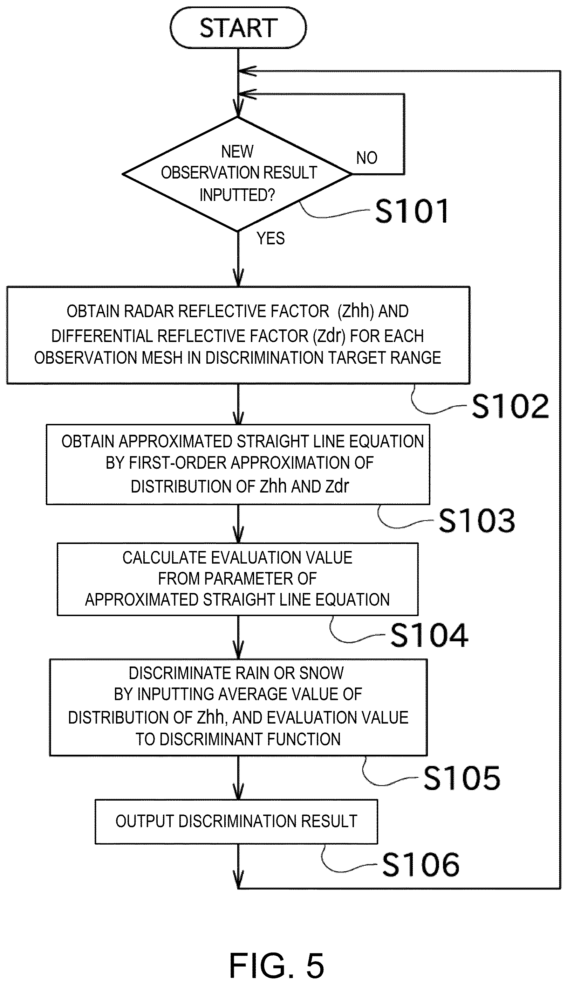

Next, processing executed by a precipitation particle discriminating program is described with reference to Fig. 5. Fig. 5 is a flowchart illustrating processing executed by the weather radar device 1.

When the processing starts, the weather radar device 1 preferably stands by until the data processor 21 acquires a new reception signal, and the discriminator 31 preferably receives an input of new observation data (polarization parameters) from the data processor 21 (Step S101).

When the discriminator 31 receives the input of the new observation data, the data extracting module 32 extracts values of the radar reflective factors Zhh and values of the differential reflective factors Zdr related to the observation meshes M in the discrimination target range T (Step S102).

Next, the distribution data generating module 35 of the evaluation value calculating module 33 generates the distribution data indicative of the relationship between the radar reflective factor Zhh and the differential reflective factor Zdr of each observation mesh M. Moreover, the distribution data analyzing module 36 of the evaluation value calculating module 33 calculates the equation of the approximated straight line which approximates the distribution data (Step S103). Then, the distribution data analyzing module 36 calculates the evaluation value from the equation of the approximated straight line (Step S104).

When the evaluation value is obtained, the particle discriminating module 38 discriminates the type of the precipitation particles existing in the discrimination target range T by using the discriminant function, based on the Zhh average value calculated by the reflective factor average calculating module 37 and the evaluation value (Step S105). The discriminator 31 preferably outputs the obtained discrimination result to an external device via the output part 41 (Step S106). Then the processing preferably returns to Step S101.

This program preferably causes the weather radar device 1 to execute a precipitation particle discrimination step. The program includes an acquiring step (Step S101) where the horizontally polarized reception signals and the vertically polarized reception signals are acquired by transmitting and receiving the horizontally polarized waves and the vertically polarized waves, respectively, a data processing step (Step S101) where information on the radar reflective factors and information on the differential reflective factors which are the polarization parameters calculated based on the horizontally polarized reception signals and the vertically polarized reception signals are acquired, a distribution data generating step (Steps S102 and S103) where the distribution data indicative of the relationship between the radar reflective factor information and the differential reflective factor information in a plurality of sampling ranges included in the discrimination target range is generated, an analysis data analyzing step (Steps S103 and S104) where the evaluation value which is used for discriminating the type of the precipitation particles is calculated based on the distribution data, and a discrimination processing step (Step S105) where the type of the precipitation particles existing in the discrimination target range is discriminated based on the evaluation value.

In this embodiment, since the discrimination is performed by obtaining the approximated straight line from the scatter plot of the data, a certain number of data is required. However, according to a trial calculation by the present inventor, with the configuration of this embodiment, the discrimination between rain and snow can be performed with a sufficient accuracy by securing less than half the number of data (e.g., approximately 40) required in the conventional method.

As described above, the weather radar device 1 includes the radar 11, the data processor 21, the distribution data generating module 35, the distribution data analyzing module 36, and the discrimination processing module 34. The radar 11 acquires the horizontally polarized reception signals and the vertically polarized reception signals by transmitting and receiving the horizontally polarized waves and the vertically polarized waves, respectively. The data processor 21 acquires the information on the radar reflective factors and the information on the differential reflective factors which are the polarization parameters calculated based on the horizontally polarized reception signals and the vertically polarized reception signals. The distribution data generating module 35 generates the distribution data indicative of the relationship between the radar reflective factor information and the differential reflective factor information in a plurality of observation meshes M included in the discrimination target range T. The distribution data analyzing module 36 calculates the evaluation value V which is used for discriminating the type of the precipitation particles based on the distribution data. The discrimination processing module 34 discriminates the type of the precipitation particles existing in the discrimination target range T based on the evaluation value V.

That is, a liquid precipitation particle preferably has the tendency that the value of the differential reflective factor Zdr increases as the value of the radar reflective factor Zhh increases, while a solid precipitation particle rarely has such a tendency. Therefore, by the intensity of the correlation between the value of the differential reflective factor Zdr and the value of the radar reflective factor Zhh being evaluated, the type of the precipitation particles can be discriminated suitably.

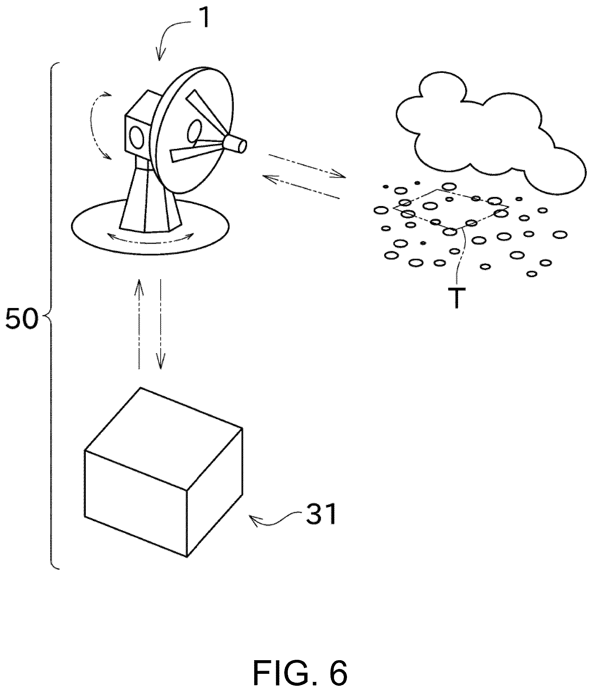

Next, a modification of the above embodiment is described, which is an example not according to the invention. Fig. 6 is a view illustrating a precipitation particle discriminating system 50 according to this modification. Note that in the description of this modification, description of components the same as or similar to those of the above embodiment is preferably omitted, while denoting the components the same reference characters in the drawing.

In the modification illustrated in Fig. 6, the discriminator 31 is preferably provided separately from the weather radar device 1. In this modification, the discriminator 31 preferably functions as the precipitation particle discriminator of the present disclosure. The weather radar device 1 and the discriminator 31 can communicate with each other via a WAN, etc. The precipitation particle discriminating system 50 is preferably implemented by the weather radar device 1 and the discriminator 31. The similar effects as the above embodiment can be achieved by the configurations of this modification.

Although the suitable embodiment according to the invention and the modification not according to the invention are described above, the above configurations are preferably changed as follows, for example.

In examples not according to the invention, the evaluation value V is preferably calculated using a correlation coefficient between the radar reflective factors and the differential reflective factors, instead of using the slope and the intercept of the approximated straight line described above. Moreover, the strength of the correlation between the radar reflective factors and the differential reflective factors, and other parameters is preferably evaluated comprehensively so as to discriminate the type of the precipitation particles.

As the radar reflective factor, the reflective intensity when the vertically polarized wave is transmitted and received (Zvv) is preferably used instead of the reflective intensity when the horizontally polarized wave is transmitted and received (Zhh).

Instead of the Zhh average value, another representative value, for example, the median of Zhh is preferably used so as to discriminate the type of precipitation particles.

The present disclosure is preferably used for discriminating the precipitation particles not only between rain and snow, but also between other types. For example, the present disclosure is preferably used for discriminating the precipitation particles between dry snow, wet snow, snow hail, etc., among the snow particles.

The frequency band of the radio waves transmitted and received by the weather radar device 1 is preferably changed to C-band, S-band, etc.

The weather radar device 1 and the discriminator 31 are preferably suitably disposed on a structure. For example, the weather radar device 1 and the discriminator 31 are preferably provided to a building or a moving body.

### DESCRIPTION OF REFERENCE CHARACTERS

- 1: Weather Radar Device (Precipitation Particle Discriminator)
- 31: Discriminator (Precipitation Particle Discriminator)
- 33: Evaluation Value Calculating Module
- 34: Discrimination Processing Module

### TERMINOLOGY

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes one or more computers or processors. The code modules may be stored in any type of non-transitory computer-readable medium or other computer storage device. Some or all the methods may be embodied in specialized computer hardware.

The various illustrative logical blocks and modules described in connection with the embodiments disclosed herein can be implemented or performed by a machine, such as a processor. A processor can be a microprocessor, but in the alternative, the processor can be a controller, microcontroller, or state machine, combinations of the same, or the like. A processor can include electrical circuitry configured to process computer-executable instructions. In another embodiment, a processor includes an application specific integrated circuit (ASIC), a field programmable gate array (FPGA) or other programmable device that performs logic operations without processing computer-executable instructions. A processor can also be implemented as a combination of computing devices, e.g., a combination of a digital signal processor (DSP) and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Conditional language such as, among others, "can," "could," "might" or "may," unless specifically stated otherwise, are otherwise understood within the context as used in general to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding whether these features, elements and/or steps are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Any process descriptions, elements or blocks in the flow diagrams described herein and/or depicted in the attached figures should be understood as potentially representing modules, segments, or portions of code which include one or more executable instructions for implementing specific logical functions or elements in the process.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C. In addition, even if a specific number of an introduced embodiment recitation is explicitly recited, those skilled in the art will recognize that such recitation should typically be interpreted to mean at least the recited number (e.g., the bare recitation of "two recitations," without other modifiers, typically means at least two recitations, or two or more recitations).

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.).

As used herein, the terms "attached," "connected," "mated," and other such relational terms should be construed, unless otherwise noted, to include removable, moveable, fixed, adjustable, and/or releasable connections or attachments. The connections/attachments can include direct connections and/or connections having intermediate structure between the two components discussed.

Unless otherwise noted, numbers preceded by a term such as "approximately," "about," and "substantially" as used herein include the recited numbers, and also represent an amount close to the stated amount that still performs a desired function or achieves a desired result. For example, the terms "approximately," "about," and "substantially" may refer to an amount that is within less than 10% of the stated amount. Features of embodiments disclosed herein preceded by a term such as "approximately," "about," and "substantially" as used herein represent the feature with some variability that still performs a desired function or achieves a desired result for that feature.

## Claims

1. A precipitation particle discriminator (1), comprising:
an acquiring part (11) configured to acquire horizontally polarized reception signals and vertically polarized reception signals by transmitting and receiving horizontally polarized waves and vertically polarized waves, respectively;
a data processor (21) configured to acquire information on radar reflective factors and information on differential reflective factors that are polarization parameters calculated based on the horizontally polarized reception signal and the vertically polarized reception signal;
a distribution data generating module (35) configured to generate distribution data indicative of relationship between the radar reflective factor information and the differential reflective factor information in a plurality of sampling ranges included in a discrimination target range, wherein the distribution data is a scatter plot where a first axis indicates the radar reflective factor, and a second axis indicates the differential reflective factor;
a distribution data analyzing module (36) configured to calculate an evaluation value used for discriminating a type of precipitation particles based on the distribution data, wherein the evaluation value (V) is calculated using an approximated line of the distribution data, wherein the approximated line is a straight line, and the evaluation value (V) is calculated at least using a slope of the straight line, and wherein the evaluation value (V) is calculated further using an intercept of the straight line; and
a discrimination processing module (34) configured to discriminate the type of the precipitation particles existing in the discrimination target range (T) based on the evaluation value (V).

2. The precipitation particle discriminator (1) of claim 1, wherein the evaluation value (V) is a value derived based on information indicating strength of correlation between the radar reflective factor information and the differential reflective factor information.

3. The precipitation particle discriminator (1) of claim 1 or 2, wherein the evaluation value (V) is calculated by a weighted addition of the slope and the intercept of the straight line.

4. The precipitation particle discriminator (1) of any one of claims 1 to 3, wherein the evaluation value (V) is a value of the differential reflective factor information on the approximated line, when a value of the radar reflective factor information is a given value of 40dBZ or higher and 60dBZ or lower.

5. The precipitation particle discriminator (1) of any one of claims 1 to 4, wherein the evaluation value (V) is a value of the differential reflective factor information on the approximated line, corresponding to an average of values of the radar reflective factor information in the distribution data.

6. The precipitation particle discriminator (1) of any one of claims 1 to 5, wherein the discrimination processing module (34) does not discriminate when a deviation of the distribution data from the approximated line is larger than a given amount.

7. The precipitation particle discriminator (1) of any one of claims 1 to 6, wherein the discrimination processing module (34) discriminates the type of the precipitation particles based on a discriminant function having, as variables, a representative value that represents values of the radar reflective factor information comprising the distribution data, and the evaluation value (V).

8. The precipitation particle discriminator (1) of any one of claims 1 to 7, wherein the discrimination by the discrimination processing module (34) includes discriminating whether the precipitation particles are rain or snow.

9. The precipitation particle discriminator (1) of any one of claims 1 to 8, further comprising a data extracting module (32) configured to extract the radar reflective factor information and the differential reflective factor information in the plurality of sampling ranges included in the discrimination target range (T) within an observation range, from the radar reflective factor information and the differential reflective factor information that are the polarization parameters calculated and acquired by the data processor based on the horizontally polarized reception signals and the vertically polarized reception signals,
wherein the distribution data generating module (35) generates the distribution data based on the radar reflective factor information and the differential reflective factor information extracted by the data extracting module.

10. A precipitation particle discriminating method, comprising the steps of:
acquiring horizontally polarized reception signals and vertically polarized reception signals by transmitting and receiving horizontally polarized waves and vertically polarized waves, respectively;
acquiring information on radar reflective factors and information on differential reflective factors that are polarization parameters calculated based on the horizontally polarized reception signals and the vertically polarized reception signals;
generating distribution data indicative of relationship between the radar reflective factor information and the differential reflective factor information in a plurality of sampling ranges included in a discrimination target range (T), wherein the distribution data is a scatter plot where a first axis indicates the radar reflective factor, and a second axis indicates the differential reflective factor;
calculating an evaluation value (V) used for discriminating a type of precipitation particles based on the distribution data, wherein the evaluation value (V) is calculated using an approximated line of the distribution data, wherein the approximated line is a straight line, and the evaluation value (V) is calculated at least using a slope of the straight line, and wherein the evaluation value (V) is calculated further using an intercept of the straight line; and
discriminating the type of the precipitation particles existing in the discrimination target range based on the evaluation value (V).

11. A precipitation particle discriminating program configured to cause the precipitation particle discriminator of claim 1 to execute the steps of acquiring horizontally polarized reception signals and vertically polarized reception signals by transmitting and receiving horizontally polarized waves and vertically polarized waves, respectively;
acquiring information on radar reflective factors and information on differential reflective factors that are polarization parameters calculated based on the horizontally polarized reception signals and the vertically polarized reception signals;
generating distribution data indicative of relationship between the radar reflective factor information and the differential reflective factor information in a plurality of sampling ranges included in a discrimination target range (T), wherein the distribution data is a scatter plot where a first axis indicates the radar reflective factor, and a second axis indicates the differential reflective factor;
calculating an evaluation value (V) used for discriminating a type of precipitation particles based on the distribution data, wherein the evaluation value (V) is calculated using an approximated line of the distribution data, wherein the approximated line is a straight line, and the evaluation value (V) is calculated at least using a slope of the straight line, and wherein the evaluation value (V) is calculated further using an intercept of the straight line; and
discriminating the type of the precipitation particles existing in the discrimination target range based on the evaluation value (V).

## Patentansprüche

1. Niederschlagspartikeldiskriminator (1), aufweisend:
einen Erfassungsteil (11), der konfiguriert ist, um horizontal polarisierte Empfangssignale und vertikal polarisierte Empfangssignale durch Senden bzw. Empfangen von horizontal polarisierten Wellen und vertikal polarisierten Wellen zu erfassen;
einen Datenprozessor (21), der konfiguriert ist, um Informationen über Radarreflexionsfaktoren und Informationen über Differenzreflexionsfaktoren zu erfassen, die Polarisationsparameter sind, die basierend auf dem horizontal polarisierten Empfangssignal und dem vertikal polarisierten Empfangssignal berechnet werden;
ein Verteilungsdatenerzeugungsmodul (35), das konfiguriert ist, um Verteilungsdaten zu erzeugen, die eine Beziehung zwischen den Radarreflexionsfaktorinformationen und den Differenzreflexionsfaktorinformationen in einer Vielzahl von Abtastbereichen angeben, die in einem Diskriminierungszielbereich enthalten sind, wobei die Verteilungsdaten ein Streudiagramm sind, wobei eine erste Achse den Radarreflexionsfaktor angibt und eine zweite Achse den Differenzreflexionsfaktor angibt;
ein Verteilungsdatenanalysemodul (36), das konfiguriert ist, um einen Bewertungswert zu berechnen, der zum Diskriminieren eines Typs von Niederschlagspartikeln basierend auf den Verteilungsdaten verwendet wird, wobei der Bewertungswert (V) unter Verwendung einer approximierten Linie der Verteilungsdaten berechnet wird, wobei die approximierte Linie eine gerade Linie ist und der Bewertungswert (V) mindestens unter Verwendung einer Neigung der geraden Linie berechnet wird, und wobei der Bewertungswert (V) ferner unter Verwendung eines Abschnitts der geraden Linie berechnet wird; und
ein Diskriminierungsverarbeitungsmodul (34), das konfiguriert ist, um den Typ der Niederschlagspartikel, die in dem Diskriminierungszielbereich (T) vorhanden sind, basierend auf dem Bewertungswert (V) zu diskriminieren.

2. Niederschlagspartikeldiskriminator (1) nach Anspruch 1, wobei der Bewertungswert (V) ein Wert ist, der basierend auf Informationen abgeleitet wird, die die Stärke der Korrelation zwischen den Radarreflexionsfaktorinformationen und den Differenzreflexionsfaktorinformationen angeben.

3. Niederschlagspartikeldiskriminator (1) nach Anspruch 1 oder 2, wobei der Bewertungswert (V) durch eine gewichtete Addition der Neigung und des Abschnitts der geraden Linie berechnet wird.

4. Niederschlagspartikeldiskriminator (1) nach einem der Ansprüche 1 bis 3, wobei der Bewertungswert (V) ein Wert der Differenzreflexionsfaktorinformationen auf der approximierten Linie ist, wenn ein Wert der Radarreflexionsfaktorinformationen ein gegebener Wert von 40 dBZ oder höher und 60 dBZ oder niedriger ist.

5. Niederschlagspartikeldiskriminator (1) nach einem der Ansprüche 1 bis 4, wobei der Bewertungswert (V) ein Wert der Differenzreflexionsfaktorinformationen auf der approximierten Linie ist, der einem Durchschnitt von Werten der Radarreflexionsfaktorinformationen in den Verteilungsdaten entspricht.

6. Niederschlagspartikeldiskriminator (1) nach einem der Ansprüche 1 bis 5, wobei das Diskriminierungsverarbeitungsmodul (34) nicht diskriminiert, wenn eine Abweichung der Verteilungsdaten von der approximierten Linie größer als ein gegebener Betrag ist.

7. Niederschlagspartikeldiskriminator (1) nach einem der Ansprüche 1 bis 6, wobei das Diskriminierungsverarbeitungsmodul (34) den Typ der Niederschlagspartikel basierend auf einer Diskriminationsfunktion diskriminiert, die als Variablen einen repräsentativen Wert, der Werte der Radarreflexionsfaktorinformationen darstellt, die die Verteilungsdaten aufweisen, und den Bewertungswert (V) aufweist.

8. Niederschlagspartikeldiskriminator (1) nach einem der Ansprüche 1 bis 7, wobei die Diskriminierung durch das Diskriminierungsverarbeitungsmodul (34) ein Diskriminieren beinhaltet, ob die Niederschlagspartikel Regen oder Schnee sind.

9. Niederschlagspartikeldiskriminator (1) nach einem der Ansprüche 1 bis 8, ferner aufweisend ein Datenextraktionsmodul (32), das konfiguriert ist, um die Radarreflexionsfaktorinformationen und die Differenzreflexionsfaktorinformationen in der Vielzahl von Abtastbereichen, die in dem Diskriminierungszielbereich (T) innerhalb eines Beobachtungsbereichs enthalten sind, aus den Radarreflexionsfaktorinformationen und den Differenzreflexionsfaktorinformationen zu extrahieren, die die Polarisationsparameter sind, die durch den Datenprozessor basierend auf den horizontal polarisierten Empfangssignalen und den vertikal polarisierten Empfangssignalen berechnet und erfasst werden,
wobei das Verteilungsdatenerzeugungsmodul (35) die Verteilungsdaten basierend auf den Radarreflexionsfaktorinformationen und den Differenzreflexionsfaktorinformationen erzeugt, die durch das Datenextraktionsmodul extrahiert werden.

10. Niederschlagspartikeldiskriminierungsverfahren, aufweisend die folgenden Schritte:
Erfassen von horizontal polarisierten Empfangssignalen und vertikal polarisierten Empfangssignalen durch Senden bzw. Empfangen von horizontal polarisierten Wellen und vertikal polarisierten Wellen;
Erfassen von Informationen über Radarreflexionsfaktoren und Informationen über Differenzreflexionsfaktoren, die Polarisationsparameter sind, die basierend auf den horizontal polarisierten Empfangssignalen und den vertikal polarisierten Empfangssignalen berechnet werden;
Erzeugen von Verteilungsdaten, die eine Beziehung zwischen den Radarreflexionsfaktorinformationen und den Differenzreflexionsfaktorinformationen in einer Vielzahl von Abtastbereichen angeben, die in einem Diskriminierungszielbereich (T) enthalten sind, wobei die Verteilungsdaten ein Streudiagramm sind, wobei eine erste Achse den Radarreflexionsfaktor angibt und eine zweite Achse den Differenzreflexionsfaktor angibt;
Berechnen eines Bewertungswerts (V), der zum Diskriminieren eines Typs von Niederschlagspartikeln basierend auf den Verteilungsdaten verwendet wird, wobei der Bewertungswert (V) unter Verwendung einer approximierten Linie der Verteilungsdaten berechnet wird, wobei die approximierte Linie eine gerade Linie ist und der Bewertungswert (V) mindestens unter Verwendung einer Neigung der geraden Linie berechnet wird, und wobei der Bewertungswert (V) ferner unter Verwendung eines Abschnitts der geraden Linie berechnet wird; und
Diskriminieren des Typs der Niederschlagspartikel, die in dem Diskriminierungszielbereich vorhanden sind, basierend auf dem Bewertungswert (V).

11. Niederschlagspartikeldiskriminierungsprogramm, das konfiguriert ist, um den Niederschlagspartikeldiskriminator nach Anspruch 1 zu veranlassen, die folgenden Schritte auszuführen:
Erfassen von horizontal polarisierten Empfangssignalen und vertikal polarisierten Empfangssignalen durch Senden bzw. Empfangen von horizontal polarisierten Wellen und vertikal polarisierten Wellen;
Erfassen von Informationen über Radarreflexionsfaktoren und Informationen über Differenzreflexionsfaktoren, die Polarisationsparameter sind, die basierend auf den horizontal polarisierten Empfangssignalen und den vertikal polarisierten Empfangssignalen berechnet werden;
Erzeugen von Verteilungsdaten, die eine Beziehung zwischen den Radarreflexionsfaktorinformationen und den Differenzreflexionsfaktorinformationen in einer Vielzahl von Abtastbereichen angeben, die in einem Diskriminierungszielbereich (T) enthalten sind, wobei die Verteilungsdaten ein Streudiagramm sind, wobei eine erste Achse den Radarreflexionsfaktor angibt und eine zweite Achse den Differenzreflexionsfaktor angibt;
Berechnen eines Bewertungswerts (V), der zum Diskriminieren eines Typs von Niederschlagspartikeln basierend auf den Verteilungsdaten verwendet wird, wobei der Bewertungswert (V) unter Verwendung einer approximierten Linie der Verteilungsdaten berechnet wird, wobei die approximierte Linie eine gerade Linie ist und der Bewertungswert (V) mindestens unter Verwendung einer Neigung der geraden Linie berechnet wird, und wobei der Bewertungswert (V) ferner unter Verwendung eines Abschnitts der geraden Linie berechnet wird; und
Diskriminieren des Typs der Niederschlagspartikel, die in dem Diskriminierungszielbereich vorhanden sind, basierend auf dem Bewertungswert (V).

## Revendications

1. Dispositif de discrimination de particules de précipitation (1), comprenant :
une partie d'acquisition (11) configurée pour acquérir des signaux de réception polarisés horizontalement et des signaux de réception polarisés verticalement par émission et réception d'ondes polarisées horizontalement et d'ondes polarisées verticalement, respectivement ;
une unité de traitement de données (21) configurée pour acquérir des informations sur des facteurs de réflexion radar et des informations sur des facteurs de réflexion différentielle qui sont des paramètres de polarisation calculés sur la base du signal de réception polarisé horizontalement et du signal de réception polarisé verticalement ;
un module de génération de données de distribution (35) configuré pour générer des données de distribution indicatives d'une relation entre les informations de facteur de réflexion radar et les informations de facteur de réflexion différentielle dans une pluralité de plages d'échantillonnage incluses dans une plage cible de discrimination, dans lequel les données de distribution sont un diagramme de dispersion où un premier axe indique le facteur de réflexion radar, et un second axe indique le facteur de réflexion différentielle ;
un module d'analyse de données de distribution (36) configuré pour calculer une valeur d'évaluation utilisée pour discriminer un type de particules de précipitation sur la base des données de distribution, dans lequel la valeur d'évaluation (V) est calculée à l'aide d'une ligne approximative des données de distribution, dans lequel la ligne approximative est une ligne droite, et la valeur d'évaluation (V) est calculée au moins à l'aide d'une pente de la ligne droite, et dans lequel la valeur d'évaluation (V) est en outre calculée en outre à l'aide d'un intercept de la ligne droite ; et
un module de traitement de discrimination (34) configuré pour discriminer le type des particules de précipitation existant dans la plage cible de discrimination (T) sur la base de la valeur d'évaluation (V).

2. Dispositif de discrimination de particules de précipitation (1) selon la revendication 1, dans lequel la valeur d'évaluation (V) est une valeur dérivée sur la base d'informations indiquant l'intensité de corrélation entre les informations sur le facteur de réflexion radar et les informations sur le facteur de réflexion différentielle.

3. Dispositif de discrimination de particules de précipitation (1) selon la revendication 1 ou 2, dans lequel la valeur d'évaluation (V) est calculée par une addition pondérée de la pente et l'intercept de la ligne droite.

4. Dispositif de discrimination de particules de précipitation (1) selon l'une des revendications 1 à 3, dans lequel la valeur d'évaluation (V) est une valeur des informations sur le facteur de réflexion différentielle sur la ligne approximative, lorsqu'une valeur des informations sur le facteur de réflexion radar est une valeur donnée de 40 dBZ ou plus et de 60 dBZ ou moins.

5. Dispositif de discrimination de particules de précipitation (1) selon l'une des revendications 1 à 4, dans lequel la valeur d'évaluation (V) est une valeur des informations de facteur de réflexion différentielle sur la ligne approximative, correspondant à une moyenne des valeurs des informations de facteur de réflexion radar dans les données de distribution.

6. Dispositif de discrimination de particules de précipitation (1) selon l'une des revendications 1 à 5, dans lequel le module de traitement de discrimination (34) ne discrimine pas lorsqu'un écart des données de distribution par rapport à la ligne approximative est supérieur à une quantité donnée.

7. Dispositif de discrimination de particules de précipitation (1) selon l'une des revendications 1 à 6, dans lequel le module de traitement de discrimination (34) discrimine le type de particules de précipitation sur la base d'une fonction discriminante présentant, en tant que variables, une valeur représentative qui représente des valeurs des informations de facteur de réflexion radar comprenant les données de distribution, et la valeur d'évaluation (V).

8. Dispositif de discrimination de particules de précipitation (1) selon l'une des revendications 1 à 7, dans lequel la discrimination par le module de traitement de discrimination (34) inclut la discrimination selon laquelle les particules de précipitation sont de la pluie ou de la neige.

9. Dispositif de discrimination de particules de précipitation (1) selon l'une des revendications 1 à 8, comprenant en outre un module d'extraction de données (32) configuré pour extraire les informations de facteur de réflexion radar et les informations de facteur de réflexion différentielle dans la pluralité de plages d'échantillonnage incluses dans la plage cible de discrimination (T) au sein d'une plage d'observation, à partir des informations de facteur de réflexion radar et des informations de facteur de réflexion différentielle qui sont les paramètres de polarisation calculés et acquis par le processeur de données à partir des signaux de réception polarisés horizontalement et des signaux de réception polarisés verticalement,
dans lequel le module de génération de données de distribution (35) génère les données de distribution sur la base des informations de facteur de réflexion radar et des informations de facteur de réflexion différentielle extraites par le module d'extraction de données.

10. Procédé de discrimination des particules de précipitation, comprenant les étapes suivantes :
acquérir des signaux de réception polarisés horizontalement et des signaux de réception polarisés verticalement par l'émission et la réception d'ondes polarisées horizontalement et d'ondes polarisées verticalement, respectivement ;
acquérir des informations sur les facteurs de réflexion radar et des informations sur les facteurs de réflexion différentielle qui sont des paramètres de polarisation calculés sur la base des signaux de réception polarisés horizontalement et des signaux de réception polarisés verticalement ;
générer des données de distribution indicatives d'une relation entre les informations de facteur de réflexion radar et les informations de facteur de réflexion différentielle dans une pluralité de plages d'échantillonnage incluses dans une plage cible de discrimination (T), dans laquelle les données de distribution sont un diagramme de dispersion où un premier axe indique le facteur de réflexion radar, et un second axe indique le facteur de réflexion différentielle ;
calculer une valeur d'évaluation (V) utilisée pour discriminer un type de particules de précipitation sur la base des données de distribution, dans lequel la valeur d'évaluation (V) est calculée à l'aide d'une ligne approximative des données de distribution, dans lequel la ligne approximative est une ligne droite, et la valeur d'évaluation (V) est calculée au moins à l'aide d'une pente de la ligne droite, et dans laquelle la valeur d'évaluation (V) est en outre calculée à l'aide d'un intercept de la ligne droite ; et
discriminer le type des particules de précipitation existant dans la plage cible de discrimination sur la base de la valeur d'évaluation (V).

11. Programme de discrimination de particules de précipitation configuré pour faire exécuter au dispositif de discrimination de particules de précipitation selon la revendication 1 les étapes suivantes :
acquérir des signaux de réception polarisés horizontalement et des signaux de réception polarisés verticalement par l'émission et la réception d'ondes polarisées horizontalement et d'ondes polarisées verticalement, respectivement ;
acquérir des informations sur les facteurs de réflexion radar et des informations sur les facteurs de réflexion différentielle qui sont des paramètres de polarisation calculés sur la base des signaux de réception polarisés horizontalement et des signaux de réception polarisés verticalement ;
générer des données de distribution indicatives d'une relation entre les informations de facteur de réflexion radar et les informations de facteur de réflexion différentielle dans une pluralité de plages d'échantillonnage incluses dans une plage cible de discrimination (T), dans laquelle les données de distribution sont un diagramme de dispersion où un premier axe indique le facteur de réflexion radar, et un second axe indique le facteur de réflexion différentielle ;
calculer une valeur d'évaluation (V) utilisée pour discriminer un type de particules de précipitation sur la base des données de distribution, dans lequel la valeur d'évaluation (V) est calculée à l'aide d'une ligne approximative des données de distribution, dans lequel la ligne approximative est une ligne droite, et la valeur d'évaluation (V) est calculée au moins à l'aide d'une pente de la ligne droite, et dans laquelle la valeur d'évaluation (V) est en outre calculée à l'aide d'un intercept de la ligne droite ; et
discriminer le type des particules de précipitation existant dans la plage cible de discrimination sur la base de la valeur d'évaluation (V).
